# EUROPEAN PATENT APPLICATION

(11) **EP 2 628 525 A1**
(43) Date of publication of application: **21.08.2013**
(21) Application number: 13168195.9
(22) Date of filing: 02.06.2011
(51) Int. Cl.: B01D 53/14, B01D 53/62, B01D 53/75, B01D 53/84

(54) **Flue gas treatment and permeate hardening**

(30) Priority: 03.06.2010 US 350930 P
(62) Divisional of application: 11738809.0
(71) Applicant: I.D.E. Technologies Ltd., Kadima 60920 (IL)
(72) Inventor: Liberman, Boris, 40500 Even Yehuda (IL)
(74) Representative: Virdee-Crofts, Kulwinder Kaur

(57) **Abstract**

The present invention relates to a system comprising: a compressor connected to a flue gas outlet of a plant and arranged to compress flue gas obtained therefrom to a specified pressure, the flue gas comprising CO₂, a water source supplying pressurized water, an absorber connected to the water source and arranged to spray water therefrom, further connected to the compressor and arranged to inject the compressed flue gas into the sprayed water to dissolve over 50% of CO₂ in the flue gas in the resulting water, a water receiving unit connected to the absorber and arranged to receive the water with dissolved flue gas therefrom and to remove dissolved CO₂ from the resulting water into an organic or a mineralized form.

## Description

### BACKGROUND

### 1. TECHNICAL FIELD

The present invention relates to flue gas treatment and water desalination more particularly, to a synergetic connection of a power plant and a desalination plant.

### 2. DISCUSSION OF THE RELATED ART

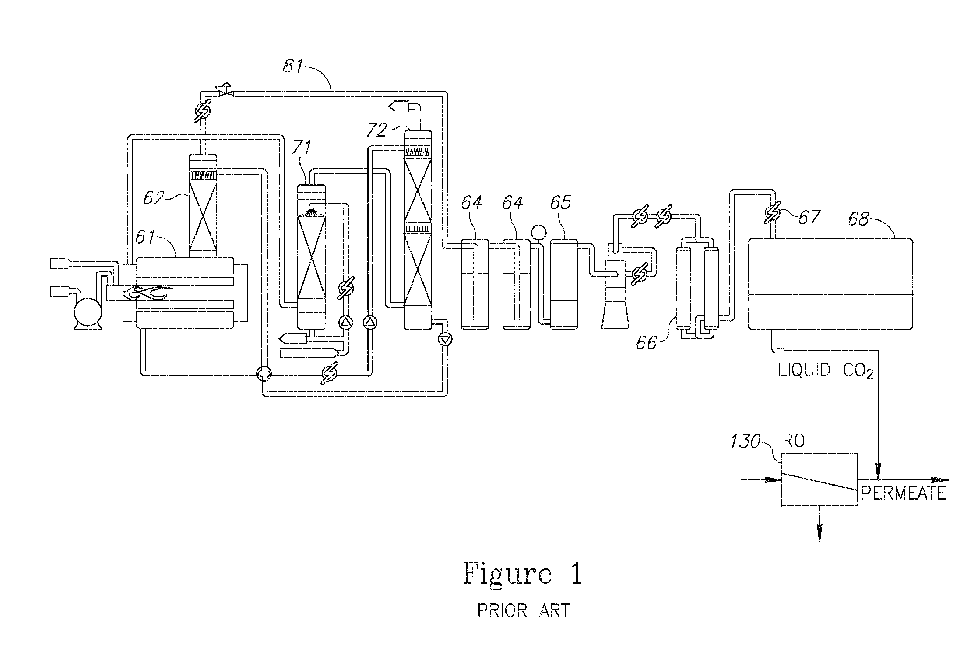

**Figure 1** is a schematic illustration of a prior art system for treating flue gas and providing CO₂ to acidify product water (permeate) from a desalination plant, such as a reverse osmosis (RO) plant **130.**

The prior art system comprises a power plant with CO₂ regenerator **61** followed by a stripper tower **62.** Power plant **61** produces flue gas **81,** including CO₂, N₂, O₂ and other gases. Some of the flue gas is processed in a cooler and scrubber unit **71** and in an absorber tower **72.** For production of CO₂, flue gas **81** goes through a processing chain comprising KMnO₄ bubblers **64,** a purification tower **65** and a CO₂ drying tower **66,** to be finally condensed by a CO₂ condenser **67** and stored as a liquid in a liquid CO₂ container **68.**

For acidifying RO product water, liquid CO₂ is mixed with the permeate, or CO₂ is bubbled into the permeate. The acidified permeate is then added limestone for hardening the water.

The process is an elaborate and expensive one.

### BRIEF SUMMARY

One aspect of the invention provides a system comprising: a compressor connected to a flue gas outlet of a plant and arranged to compress flue gas obtained therefrom to a specified pressure, the flue gas comprising CO₂, a water source supplying pressurized water, an absorber connected to the water source and arranged to spray water therefrom, further connected to the compressor and arranged to inject the compressed flue gas into the sprayed water to dissolve over 50% of CO₂ in the flue gas in the resulting water, and a water receiving unit connected to the absorber and arranged to receive the water with dissolved flue gas therefrom and to remove dissolved CO₂ from the resulting water into an organic or a mineralized form.

### BRIEF DESCRIPTION OF THE DRAWINGS

For a better understanding of embodiments of the invention and to show how the same may be carried into effect, reference will now be made, purely by way of example, to the accompanying drawings in which like numerals designate corresponding elements or sections throughout.

In the accompanying drawings:
**Figures 2-4** are high level schematic block diagrams illustrating a system according to some embodiments of the invention, and
**Figure 5** is a high level flowchart illustrating a method according to some embodiments of the invention.

The drawings together with the following detailed description make apparent to those skilled in the art how the invention may be embodied in practice.

### DETAILED DESCRIPTION

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

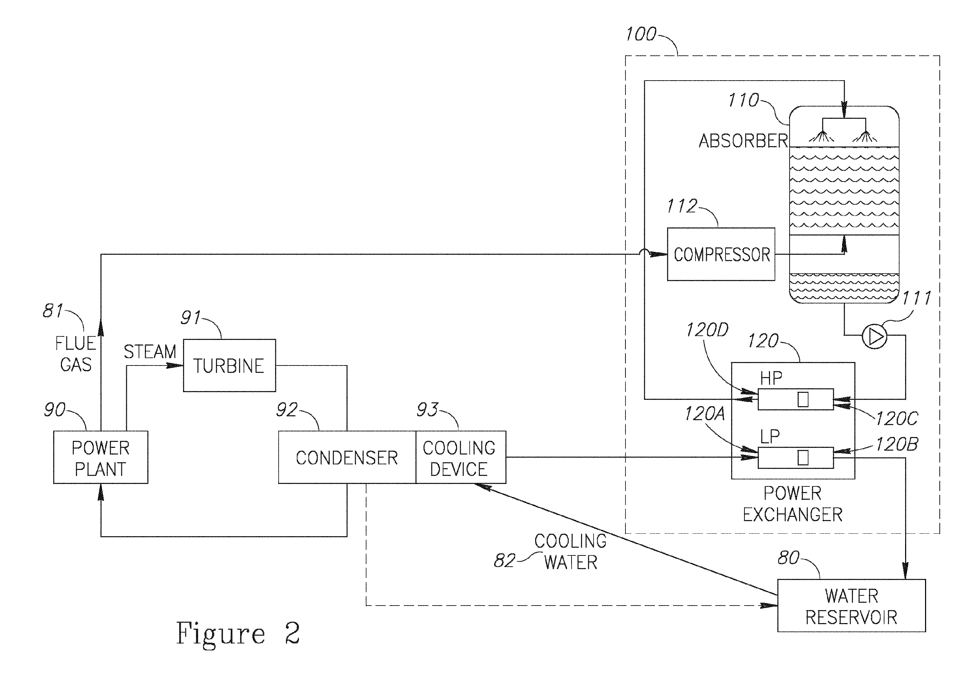

**Figure 2** is a high level schematic block diagram illustrating a system **100** according to some embodiments of the invention.

System **100** comprises a compressor **112,** an absorber **110** and a water receiving unit (depicted in **Figure 2** as power exchanger **120** and water reservoir **80).**

Compressor **112** is connected to a flue gas outlet of a plant **90** and is arranged to compress flue gas **81** obtained therefrom to a specified pressure e.g. 20 bar that allows dissolving flue gas **81** into water sprayed in absorber **110.** Flue gas **81** comprises CO₂, N₂, O₂ and other gases.

Absorber **110** is connected to a water source that supplies pressurized water (e.g. at 20 bar). The water source may comprise pumped seawater serving as cooling water **82** in power plant **90,** as illustrated in **Figure 2****.** Pressurization of the water supplied to absorber **110** may be carried out by a pressure exchanger **120** as explained below, to preserve the built up pressure while exchanging liquids in the high pressure loop.

Absorber **110** is arranged to spray the pressurized water in inject into the water compressed flue gas **81** from compressor **112.** A large part of the CO₂ in the injected flue gas, e.g. over 50%, dissolves under the pressure into the sprayed water, to produce resulting water enriched with dissolved gases, mainly CO₂. System **100** utilizes the high dissolvability of CO₂ in water (ca. 1200 ppm) in respect to the dissolvability of the other flue gas constituents (e.g. O₂ ca. 10 ppm, N₂ ca. 1 ppm, at 20 bar).

The water receiving unit is connected to absorber **110** and is arranged to receive the water with dissolved flue gas therefrom and to remove dissolved CO₂ from the resulting water into an organic or a mineralized form. For example, in **Figure 2****,** the resulting water is removed over power exchanger (to maintain their high pressure) and dispensed to water reservoir **80** such as the sea. In the sea, dissolved CO₂ is turned into organic matter by algae, and other gas constituents may evaporate.

System **100** thus removes CO₂ from the flue gas and makes the CO₂ available for biological and mineralization processes within water reservoir **80** (such as the sea), thereby reducing CO₂ emissions of power plant **90** to the atmosphere.

Power exchanger **120** has a low pressure (LP) inlet **120A,** a low pressure outlet **120B,** a high pressure inlet **120C** and a high pressure outlet **120D,** as illustrated in **Figure 2****.** Power exchanger **120** is arranged to exchange fluid between a low pressure loop and a high pressure loop while maintaining the respective pressures.

Power exchanger **120** is connected to the water source, for example a cooling water source **93** (arranged to cool a condenser **92** receiving steam from a turbine **91** in power plant **90)** and is arranged to receive water therefrom in low pressure inlet **120A.**

Power exchanger **120** is connected to a pump **111** that is arranged to receive and pressurize the resulting water from absorber **110.** Power exchanger **120** is arranged to receive the pressurized resulting water from pump **111** in high pressure inlet **120C.**

Power exchanger **120** is arranged to discharge, from high pressure outlet **120D,** water from low pressure inlet **120A** that is pressurized by the pressurized resulting water from high pressure inlet **120C** and to discharge, from low pressure outlet **120B,** depressurized pressurized resulting water from high pressure inlet **120C.**

Absorber **110** is connected to high pressure outlet **120D** of power exchanger **120** to receive therefrom the water for spraying.

When the water fed to absorber **110** is cooling water **82** of the same plant **90** producing flue gas **81,** system provides a solution for CO₂ removal and sequestration. The sea may be the source for cooling water **82** as well as the water reservoir **80** into which CO₂ enriched water is disposed for organic CO₂ utilization.

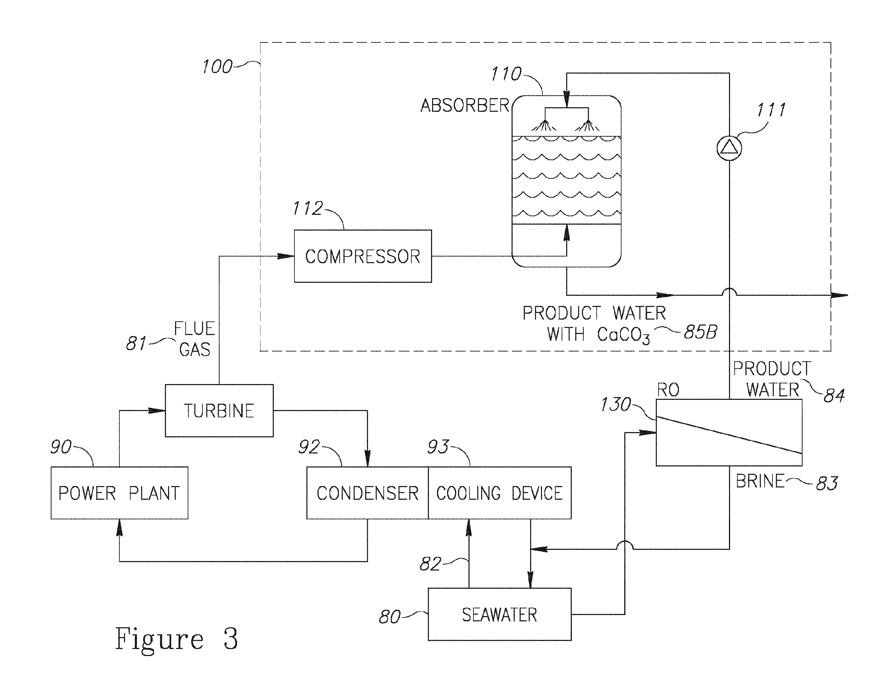

**Figure 3** is a high level schematic block diagram illustrating system **100** according to some embodiments of the invention.

System **100** comprises compressor **112,** absorber **110** and a water receiving unit (depicted in **Figure 3** as the hardened product water **85B).**

Compressor **112** is connected to a flue gas outlet of a plant **90** and is arranged to compress flue gas **81** obtained therefrom to a specified pressure e.g. 20 bar that allows dissolving flue gas **81** into water sprayed in absorber **110.** Flue gas **81** comprises CO₂, N₂, O₂ and other gases.

Absorber **110** is connected to a water source that supplies pressurized water. The water source may comprise permeate or product water **84** from a reverse osmosis (RO) plant **130,** as illustrated in **Figure 3****.** Product water **84** are pressurized by pump **111** before entering absorber **110,** e.g. to a pressure of 20 bar.

Absorber **110** is arranged to spray the pressurized product water in inject into the water compressed flue gas **81** from compressor **112.** A large part of the CO₂ in the injected flue gas, e.g. over 50%, dissolves under the pressure into the sprayed water, to produce resulting water enriched with dissolved gases, mainly CO₂. System **100** utilizes the high dissolvability of CO₂ in water (ca. 1200 ppm) in respect to the dissolvability of the other flue gas constituents (e.g. O₂ ca. 10 ppm, N2 ca. 1 ppm).

The water receiving unit is connected to absorber **110** and is arranged to receive the product water enriched with dissolved CO₂ therefrom and to mineralize the CO₂ as CaCO₃ or MgCO₃ to harden the product water.

System **100** not only removes CO₂ from flue gas **81,** but also synergetically acidifies permeate **84** of RO plant **130** to spare the necessary addition of expensive liquid CO₂ (see **Figure 1****).**

When seawater **80** is the source of cooling water **82** for plant **90** providing flue gas **81,** brine **83** from RO plant **130** may be disposed into sea **80,** or mixed with disposed cooling water to reduce its salinity, hence providing a second synergy with plant **90.**

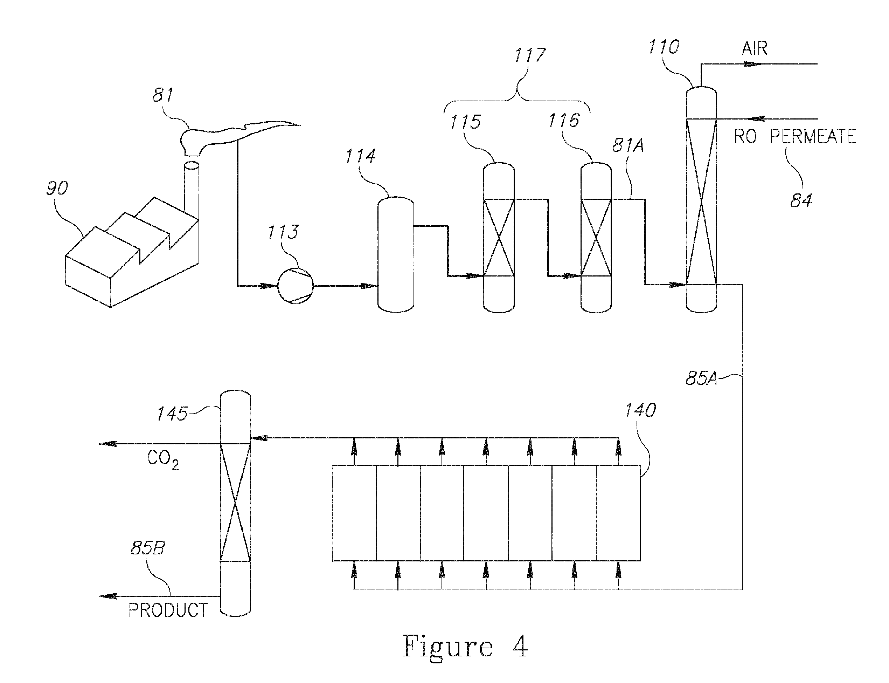

**Figure 4** is a high level schematic block diagram illustrating system **100** according to some embodiments of the invention.

System **100** comprises a cleaning unit **117** connected between compressor **112** and absorber **110** or before compressor **112** (not shown in **Figure 4****).**

Cleaning unit **117** is connected after a blower **113** conducting flue gas **81** (comprising e.g. 6-17% CO₂) to a direct contact cooling tower **114** for cooling. Cleaning unit **117** comprises a permanganate cleaning unit **115** arranged to bring the flue gas into gas-liquid contact with a permanganate solution, to generate a first stage treated flue gas in which all toxic gases (e.g. NO₂) are oxidized.

Cleaning unit **117** further comprises an activated carbon unit **116** arranged to bring the first stage treated flue gas into gas-solid contact with activated carbon that adsorbs organic matter from the flue gas, to generate a cleaned CO₂ in air mixture **81A.** Cleaned CO₂ in air mixture **81A** is dissolved in RO permeate **84** to yield acidified product **85A.**

System **100** may further comprise a limestone reactor **140** connected to absorber **110,** and arranged to bring received resulting CO₂ enriched product water **85A** into contact with limestone, to mineralize the CO₂ to harden the product water **85B.** Excess CO₂ from product water **85B** may be removed in a desorber tower **145** by a stripping air stream. Residual CO₂ may be treated, returned to CO₂ in air mixture **81A** or dissolved in water disposed to water reservoir **80.**

In exemplary projects, power plant **90**'s CO₂ production of 30-56 tons CO₂ per day, may provide 19-36 ton CO₂ per day used in associated desalination plants, thereby simultaneously sequestering CO₂ from flue gas **81** and sparing the expensive addition of CO₂ in the post treatment of permeate.

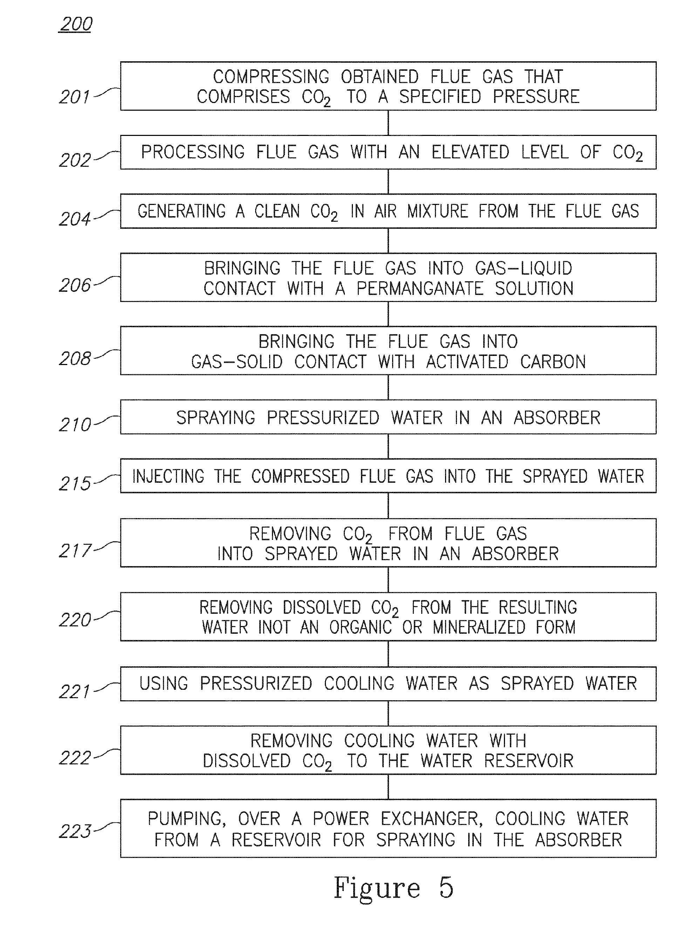

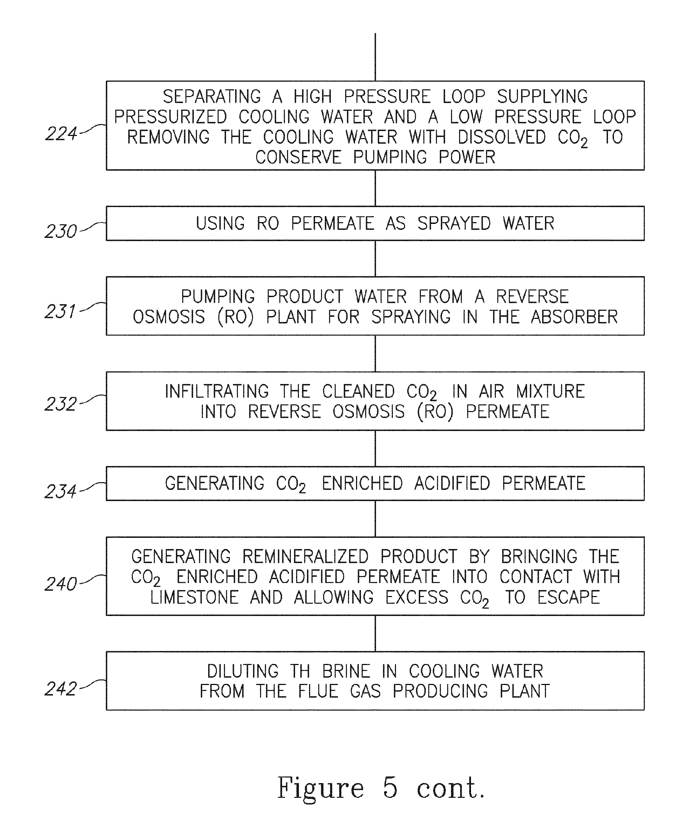

**Figure 5** is a high level flowchart illustrating a method **200** according to some embodiments of the invention.

Method **200** comprises the following stages: compressing obtained flue gas that comprises CO₂ to a specified pressure (stage **201),** e.g. 20 bar, spraying pressurized water (e.g. at 20 bar) in an absorber (stage **210),** injecting the compressed flue gas into the sprayed water (stage **215)** to dissolve over 50% of the CO₂ in the flue gas in the resulting water (stage **217),** and removing dissolved CO₂ from the resulting water into an organic or a mineralized form (stage **220).**

In embodiments, method **200** comprises using pressurized cooling water as sprayed water (stage **221),** and removing cooling water with dissolved CO₂ to the water reservoir (stage **222),** e.g. into a reservoir in which CO₂ is consumed by algae.

In embodiments, method **200** further comprises pumping (stage **223),** over a power exchanger, cooling water from a reservoir for spraying in the absorber. Removing the cooling water (stage **222)** is carried out over the power exchanger and back into the reservoir. The cooling water and the flue gas may be associated with the same power plant. The reservoir may be a sea and the water seawater. The dissolved CO₂ may be consumed by algae in the sea.

Method **200** may comprise separating a high pressure loop supplying pressurized cooling water and a low pressure loop removing the cooling water with dissolved CO₂ to conserve pumping power (stage **224).**

In embodiments, method **200** comprises using RO permeate as sprayed water (stage **230)** by pumping (stage **231)** product water from a reverse osmosis (RO) plant for spraying in the absorber (stage **210).**

Method **200** may comprise processing and cleaning flue gas with an elevated level of CO₂ (stage **202)** and generating a clean CO₂ in air mixture from the flue gas (stage **204)** by bringing the flue gas into gas-liquid contact with a permanganate solution (stage **206)** and bringing the flue gas into gas-solid contact with activated carbon (stage **208)** (see **Figure 4****).**

In embodiments, method **200** comprises infiltrating the cleaned CO₂ in air mixture into reverse osmosis (RO) permeate (stage **232)** to generate CO₂ enriched acidified permeate (stage **234)** and generating remineralized product by bringing the CO₂ enriched acidified permeate into contact with limestone and allowing excess CO₂ to escape (stage **240)** such that removing of dissolved CO₂ (stage **220)** is carried out by mineralization to CaCO₃ to harden the product water.

Method **200** may further comprise mixing brine from the RO plant with cooling water associated with a plant producing the flue gas to dilute the brine prior to disposal (stage **242).**

In the above description, an embodiment is an example or implementation of the invention. The various appearances of "one embodiment", "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Furthermore, it is to be understood that the invention can be carried out or practiced in various ways and that the invention can be implemented in embodiments other than the ones outlined in the description above.

The invention is not limited to those diagrams or to the corresponding descriptions. For example, flow need not move through each illustrated box or state, or in exactly the same order as illustrated and described.

Meanings of technical and scientific terms used herein are to be commonly understood as by one of ordinary skill in the art to which the invention belongs, unless otherwise defined.

While the invention has been described with respect to a limited number of embodiments, these should not be construed as limitations on the scope of the invention, but rather as exemplifications of some of the preferred embodiments. Other possible variations, modifications, and applications are also within the scope of the invention.

## Claims

1. A system comprising:
a compressor connected to a flue gas outlet of a plant and arranged to compress flue gas obtained therefrom to a specified pressure, the flue gas comprising C02,
a water source supplying pressurized water,
an absorber connected to the water source and arranged to spray water therefrom, further connected to the compressor and arranged to inject the compressed flue gas into the sprayed water to dissolve over 50% of C02 in the flue gas in the resulting water,
a water receiving unit connected to the absorber and arranged to receive the water with dissolved flue gas therefrom and to remove dissolved C02 from the resulting water into an organic or a mineralized form.

2. The system of claim 1, further comprising a reverse osmosis (RO) plant arranged to produce, from sea water, product water at a product water outlet and brine, wherein the absorber is connected to the product water outlet to receive therefrom the water for spraying, and wherein the resulting water is C02 enriched product water.

3. The system of claim 2, further comprising a cleaning unit connected between the compressor and the absorber, the cleaning unit comprising:
a permanganate cleaning tank arranged to bring the flue gas into gas-liquid contact with a permanganate solution, to generate a first stage treated flue gas, and
an activated carbon container arranged to bring the first stage treated flue gas into gas- solid contact with activated carbon, to generate a cleaned C02 in air mixture.

4. The system of claim 2, further comprising a limestone reactor connected to the absorber, and arranged to bring received resulting C02 enriched product water into contact with limestone, to mineralize the C02 to harden the product water.

5. A method comprising:
compressing obtained flue gas that comprises C02 to a specified pressure, spraying pressurized water in an absorber,
injecting the compressed flue gas into the sprayed water to dissolve over 50% of the C02 in the flue gas in the resulting water, and
removing dissolved C02 from the resulting water into an organic or a mineralized form.

6. The method of claim 5, further comprising pumping product water from a reverse osmosis (RO) plant for spraying in the absorber and wherein the removing of dissolved C02 is carried out by mineralization to CaC03 to harden the product water.

7. The method of claim 6, further comprising mixing brine from the RO plant with cooling water associated with a plant producing the flue gas to dilute the brine prior to disposal.

8. The method of claim 6, further comprising cleaning the flue gas by bringing the flue gas into gas-liquid contact with a permanganate solution and into gas-solid contact with activated carbon, to yield a cleaned C02 in air mixture.
